# EUROPEAN PATENT SPECIFICATION

(11) **EP 0 609 676 B1**
(45) Date of publication and mention of the grant of the patent: **25.06.1997**
(21) Application number: 94100455.8
(22) Date of filing: 13.01.1994
(51) Int. Cl.: B29C 45/27

(54) **Injection molding nozzle with thermocouple tube**
Spritzgiessdüse mit Thermoelementrohr
Buse d'injection avec tube pour thermocouple

(30) Priority: 27.01.1993 CA 2088228
(43) Date of publication of application: 10.08.1994
(73) Proprietor: Gellert, Jobst Ulrich, Georgetown Ontario L7G 4X5 (CA)
(72) Inventor: Gellert, Jobst Ulrich, Georgetown Ontario L7G 4X5 (CA)
(74) Representative: Grünecker, Kinkeldey, Stockmair & Schwanhäusser Anwaltssozietät

(56) References cited:
- EP-A- 0 283 001
- EP-A- 0 546 581
- US-A- 4 768 283

## Description

### BACKGROUND OF THE INVENTION

This invention relates generally to injection molding and more particularly to a heated nozzle having a tube for removably receiving a thermocouple element extending along the inner surface of a cylindrical locating flange where it is spaced from the outer surface of the central portion of the nozzle.

Mounting a heated injection molding nozzle in a well in a cooled mold with an insulative air space between them is well known. It is also known to run a thermocouple element through the air space to monitor the operating temperature near the forward end of the nozzle. An example of this is shown in the applicant's U.S. patent number 4,583,284 which issued April 22, 1986 where the thermocouple element extends into the insulative air space through an opening in the mold. Another example is seen in the applicant's U.S. patent number 4,768,283 which issued September 6, 1988 where the thermocouple element extends into the insulative air space through a thermocouple bore extending forwardly through the rear collar portion of the nozzle. While these previous configurations are usually satisfactory, they have the danger that in the event of a leak of pressured melt into the air space, the melt will flow out of the air space along the thermocouple element and fill the electrical wire channels in the mold. The resulting plastic spread throughout the mold is very difficult to remove when the mold has to be disassembled.

U. S. patent number 4,705,473 to Schmidt which issued November 10, 1987 shows an arrangement which avoids this problem by extending the thermocouple bore entirely through the nozzle and not entering the insulative air space around it. However, this configuration has the disadvantage that it is more difficult to make and is not possible when the nozzle diameter is reduced to produce compact nozzles.

### SUMMARY OF THE INVENTION

Accordingly, it is an object of the present invention to at least partially overcome the disadvantages of the prior art by providing a heated nozzle with a thermocouple tube which prevents the leakage of melt along the thermocouple element.

To this end, in one of its aspects, the invention provides an injection molding nozzle to be mounted in a well in a cooled mold, the nozzle having a rear end, a forward end, a rear collar portion adjacent to the rear end, and a central portion extending forwardly from the rear collar portion, the central portion having a generally cylindrical outer surface and the rear collar portion being larger in diameter than the central portion, the nozzle having a melt channel extending therethrough to convey melt from an inlet at the rear end towards at least one gate extending through the mold to a cavity, the nozzle having an integral electrical heating element with a spiral portion extending around at least a portion of the melt channel, the nozzle having a cylindrical locating flange extending a predetermined distance forwardly from the rear collar portion around the central portion, the locating flange having an inner surface spaced from the outer surface of the central portion by an insulative space having a predetermined width, the rear collar portion of the nozzle having a thermocouple bore extending therethrough from the rear end to the insulative space between the central portion and the locating flange, having the improvement wherein the nozzle comprises a hollow thermocouple tube extending from the thermocouple bore in contact with the locating flange to removably receive a thermocouple element extending into the insulative space, the thermocouple tube being spaced a predetermined distance from the outer surface of the central portion of the nozzle.

Further objects and advantages of the invention will appear from the following description taken together with the accompanying drawings.

### BRIEF DESCRIPTION OF THE DRAWINGS

Figure 1 is a sectional view of a portion of a multi-cavity injection molding system showing a nozzle according to a preferred embodiment of the invention, and
Figure 2 is a cut-away isometric view of a portion of the nozzle seen in Figure 1 showing the clearance between the thermocouple tube and the central portion of the nozzle.

### DETAILED DESCRIPTION OF THE DRAWINGS

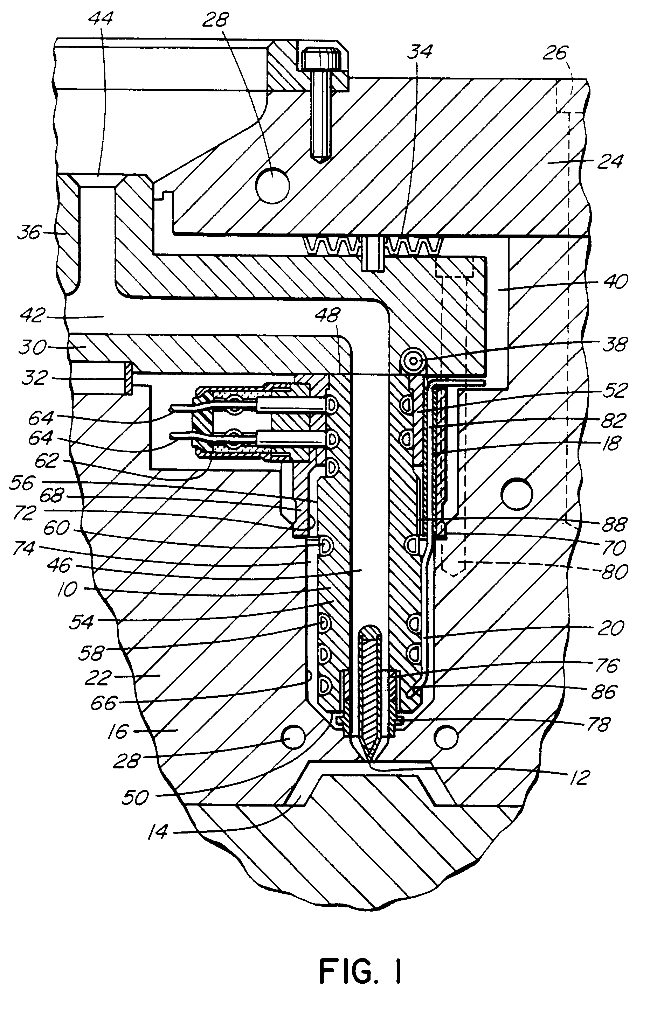

Reference is first made to Figure 1 which shows a portion of a multi-cavity injection molding system having several steel nozzles 10 to convey pressurized plastic melt to respective gates 12 leading to different cavities 14 in the mold 16. Each nozzle 10 has a thermocouple tube 18 through which a thermocouple element 20 extends according to the invention. In this particular configuration, the mold includes a cavity plate 22, and a back plate 24 which are removably secured together by bolts 26. The mold 16 is cooled by pumping cooling water through cooling conduits 28 extending in the cavity plate 22, and the back plate 24. An electrically heated steel melt distribution manifold 30 is mounted between the cavity plate 22 and the back plate 24 by a central locating ring 32 and insulative and resilient spacer members 34. The melt distribution manifold 30 has a cylindrical inlet portion 36 and is heated by an integral electrical heating element 38. An insulative air space 40 is provided between the heated manifold 30 and the surrounding cooled cavity plate 22, and back plate 24. A melt passage 42 extends from a common inlet 44 in the inlet portion 36 of the manifold 30 and branches outward in the manifold 30 to each nozzle 10 where it extends through a central melt channel 46 to one of the gates 12.

Each nozzle 10 has a rear end 48, a forward end 50, a rear collar portion 52 adjacent the rear end 48, and a central portion 54 which extends forwardly from the rear collar portion 52. The central portion 54 has a generally cylindrical outer surface 56, and the rear collar portion 52 is larger in diameter than the central portion 54. The nozzle 10 is heated by an integral electrical heating element 58 which has a spiral portion 60 extending around the melt channel 46 and an external terminal 62 to which electrical leads 64 from a power source are connected. The nozzle 10 is seated in a well 66 in the cavity plate 22 with a cylindrical locating flange 68 extending a predetermined distance forwardly from the collar portion 52 to a circular locating shoulder 70 in the well 66. The locating flange 68 has an inner surface 72 which is spaced from the outer surface 56 of the central portion 54 by an insulative air space 74 which also extends between the heated central portion 54 of the nozzle 10 and the surrounding cooled cavity plate 22.

In this configuration, the melt channel 46 extends centrally from the rear end 48 to a torpedo 76 which is seated in the forward end 50 in alignment with one of the gates 12. A hollow nozzle seal 78 is seated in the cavity plate 22 around the gate 12 to retain the torpedo 76 in place and prevent melt leaking into the air space 74. Of course, nozzles 10 to provide other types of gating will have different configurations. The melt distribution manifold 30 and the nozzles 10 are securely retained in this position against the melt injection pressure by the space members 34 and also by bolts 80 which extend from the manifold 30 into the cavity plate 22.

The nozzle 10 has a thermocouple bore 82 which extends through the rear collar portion 52 from the rear end 48 to the insulative air space 74 between the central portion 54 and the locating flange 68. In this embodiment, the hollow thermocouple tube 18 which is made of stainless steel extends through the thermocouple bore 82 in the collar portion 52 and along the inner surface 72 of the locating flange 68. In an alternate embodiment, the thermocouple tube 18 can be mounted along the inner surface 72 of the locating flange 68 to extend directly from the thermocouple bore 82 in the collar portion 52 so that any melt which escapes into the air space 74 cannot leak between them.

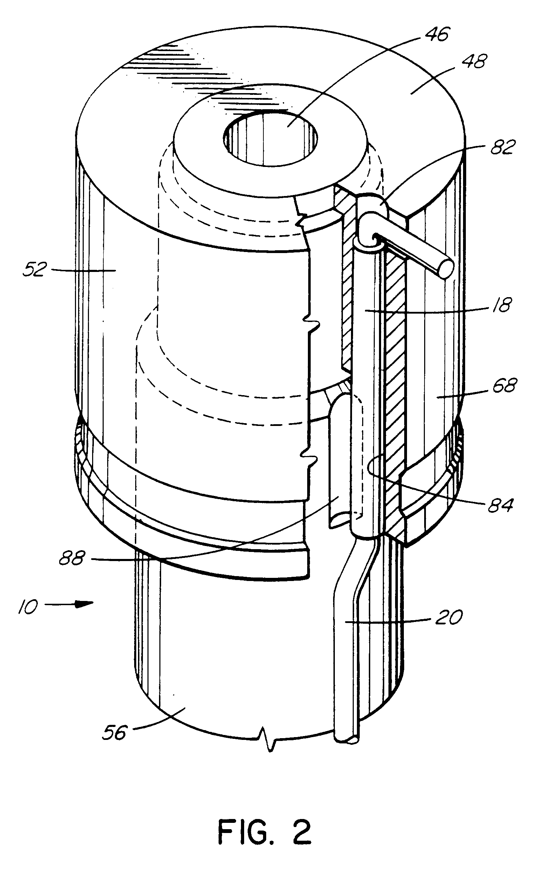

As best seen in Figure 2, in this embodiment the thermocouple tube 18 is partially seated in a groove 84 in the inner surface 72 of the locating flange 68. A nickel alloy brazing material is applied along it, and it is integrally brazed in place in a vacuum furnace at the same time as the other components of the nozzle are integrally brazed together. The thermocouple tube 18 removably receives the thermocouple element 20 which then runs through the air space 74 and into a suitable bore 86 to monitor the operating temperature near the forward end 50 of the nozzle 10.

As will be appreciated, the relatively thin locating flange 68 is to some extent cooled by contact with the cooled cavity plate 22 against which it is located and seated. In the event of a leak of pressurized melt into the air space 74 around the central portion 54 of the nozzle, the contact of the thermocouple tube 18 with the locating flange 68 cools the melt which flows into the thermocouple tube 18 around the thermocouple element 20 sufficiently to freeze it and prevent leakage through the thermocouple tube 18. In this embodiment, as clearly seen in Figure 2, the outer surface 56 of the central portion 54 of the nozzle 10 is depressed adjacent the thermocouple tube 18 by having a channel 88 which extends in alignment with the thermocouple tube 18. This provides additional clearance between the thermocouple tube 18 and the central portion 54 of the nozzle 10 to avoid heat from the heated central portion 54 overcoming the cooling effect on the thermocouple tube 18 from the locating flange 68.

In use, the injection molding system is assembled as shown in Figure 1. While only a single cavity 14 has been shown for ease of illustration, it will be appreciated that the melt distribution manifold 30 normally has many more melt passage branches extending to numerous cavities 14 depending on the application. Electrical power is applied to the heating element 38 in the manifold 30 and to the heating elements 58 in the nozzles 10 to heat them to a predetermined operating temperature. Pressurized melt from a molding machine (not shown) is then injected into the melt passage 42 through the common inlet 44 according to a predetermined cycle in a conventional manner. The pressurized melt flows through the melt channels 46 of the respective nozzles 10 to the gates 12 to fill the cavities 14. After the cavities 14 are filled, injection pressure is held momentarily to pack and then released. After a short cooling period, the mold is opened to eject the molded products. After ejection, the mold is closed and injection pressure is reapplied to refill the cavities 14. This cycle is continuously repeated with a frequency dependent on the size and shape of the cavities 14 and the type of material being molded. If the pressurized melt leaks past the nozzle seal 78 and fills the air space 74, it flows into the thermocouple tube 18 around the thermocouple element 20. However, the contact of the thermocouple tube 18 with the locating flange 68 cools the thermocouple tube 18 sufficiently to freeze the melt in the tube and prevent it escaping amongst the wiring in other parts of the mold.

While the description of the nozzle has been given with respect to a preferred embodiment, it will be evident that various modifications are possible without departing from the scope of the invention as understood by those skilled in the art and as defined in the following claims.

## Claims

1. In an injection molding nozzle (10) to be mounted in a well in a cooled mold (16), the nozzle having a rear end (48), a forward end (50), a rear collar portion (52) adjacent the rear end (48), and a central portion (54) extending forwardly from the rear collar portion (52), the central portion (54) having a generally cylindrical outer surface (56) and the rear collar portion (52) being larger in diameter than the central portion (54), the nozzle (10) having a melt channel (46) extending therethrough to convey melt from an inlet (36) at the rear end (48) towards at least one gate (12) extending through the mold to a cavity (14), the nozzle (10) having an integral electrical heating element (58) with a spiral portion extending around at least a portion of the melt channel (46), the nozzle having a cylindrical locating flange (68) extending a predetermined distance forwardly from the rear collar portion (52) around the central portion (54), the locating flange (68) having an inner surface (72) spaced from the outer surface (56) of the central portion (54) by an insulative space (74) having a predetermined width, the rear collar portion (52) of the nozzle (10) having a thermocouple bore (82) extending therethrough from the rear end (48) to the insulative space (74) between the central portion (54) and the locating flange, (68) characterised in that
the nozzle (10) comprises a hollow thermocouple tube (18) extending from the thermocouple bore (82) a predetermined distance forwardly along the inner surface of the locating flange (68) to removably receive a thermocouple element (20) extending into the insulative space (74), the thermocouple tube (18) being spaced a predetermined distance from the outer surface (56) of the central portion (54) of the nozzle (10).

2. An injection molding nozzle (10) as claimed in claim 1 wherein the thermocouple tube (18) also extends through the thermocouple bore (82) through the rear collar portion (52) of the nozzle (10).

3. An injection molding nozzle (10) as claimed in claim 2 wherein the thermocouple tube (18) is at least partially seated in a groove (84) in the inner surface (72) of the locating flange (68) of the nozzle.

4. An injection molding nozzle (10) as claimed in claim 3 wherein the thermocouple tube (18) is integrally brazed in place.

5. An injection molding nozzle (10) as claimed in claim 4 wherein the outer surface (56) of the central portion (54) is depressed adjacent the thermocouple tube (18) to provide sufficient clearance therebetween.

6. An injection molding nozzle (10) as claimed in claim 4 wherein the outer surface of the central portion has a channel (88) extending in alignment with the thermocouple tube (18) to provide sufficient clearance therebetween.

## Patentansprüche

1. Spritzgußdüse (10) zum Einbau in einen Einlauf einer gekühlten Form (16), wobei die Düse ein hinteres Ende (48), ein vorderes Ende (50), einen hinteren Bundabschnitt (52) neben dem hinteren Ende (48) und einen Mittelabschnitt (54), der sich von dem hinteren Bundabschnitt (52) nach vorne erstreckt, aufweist, wobei der Mittelabschnitt (54) eine im wesentliche zylindrische Außenfläche (56) aufweist und der hintere Bundabschnitt (52) einen größeren Durchmesser als der Mittelabschnitt (54) aufweist, wobei die Düse (10) weiterhin einen sich durch diese erstreckenden Schmelzenkanal (46) aufweist, um Schmelze von einem Einlaß (36) an dem hinteren Ende (48) zu wenigstens einem Einguß (12) zu fördern, der sich durch die Form zu einem Hohlraum (14) erstreckt, wobei die Düse (10) weiterhin ein integrales, elektrisches Heizelement (58) mit einem sich zumindest um einen Abschnitt des Schmelzenkanals (46) erstreckenden Spiralabschnitt aufweist, sowie einen zylindrischen Lageflansch (68), der sich in einem bestimmten Abstand von dem hinteren Bundabschnitt (52) nach vorne um den Mittelabschnitt (54) erstreckt, wobei der Lageflansch (68) eine Innenfläche (72) aufweist, die von der Außenfläche (56) des Mittelabschnittes (54) durch einen Isolierraum (54) vorgegebener Breite beabstandet ist, der hintere Bundabschnitt (52) der Düse (10) eine Thermoelementbohrung (82) aufweist, die sich durch diesen von dem hinteren Ende (48) zu dem Isolierraum (74) zwischen dem Mittelabschnitt (54) und dem Lageflansch (68) erstreckt, **dadurch gekennzeichnet,** daß die Düse (10) ein hohles Thermoelementrohr (18) aufweist, das sich von der Thermoelementbohrung (82) um einen vorbestimmten Abstand nach vorne entlang der Innenfläche des Lageflansches (68) erstreckt, um ein sich in den Isolierraum (74) erstreckendes Thermoelement (20) entfernbar aufzunehmen, wobei das Thermoelementrohr (18) in einem vorbestimmten Abstand von der Außenfläche (56) des Mittelabschnittes (54) der Düse (10) beabstandet ist.

2. Spritzgußdüse (10) nach Anspruch 1, **dadurch gekennzeichnet**, daß das Thermoelmentrohr (18) sich weiterhin durch die Thermoelementbohrung (82) durch den hinteren Bundabschnitt (52) der Düse (10) erstreckt.

3. Spritzgußdüse (10) nach Anspruch 2, **dadurch gekennzeichnet**, daß das Thermoelementrohr (18) zumindest teilweise in einer Nut (84) in der Innenfläche (72) des Lageflansches (68) der Düse sitzt.

4. Spritzgußdüse (10) nach Anspruch 3, **dadurch gekennzeichnet**, daß das Thermoelementrohr (18) an seinem Platz integral angelötet ist.

5. Spritzgußdüse (10) nach Anspruch 4, **dadurch gekennzeichnet**, daß die Außenfläche (56) des Mittelabschnittes (54) neben dem Thermoelementrohr (18) vertieft ist, um einen ausreichenden Zwischenraum zwischen beiden bereitzustellen.

6. Spritzgußdüse (10) nach Anspruch 4, **dadurch gekennzeichnet**, daß die Außenfläche des Mittelabschnittes eine sich zu dem Thermoelementrohr (18) ausgerichtet erstreckende Rinne (88) aufweist, um einen ausreichenden Zwischenraum zwischen beiden bereitszustellen.

## Revendications

1. Buse de moulage par injection (10) devant être montée dans un puits dans un moule (16) refroidi, la buse ayant une extrémité arrière (48), une extrémité avant (50), une partie formant bride arrière (52) adjacente à l'extrémité arrière (48), et une partie centrale (54) s'étendant vers l'avant de la partie de bride arrière (52), la partie centrale (54) ayant une surface extérieure (56) globalement cylindrique et la partie de bride arrière (52) ayant un diamètre supérieur à celui de la partie centrale (54), la buse (10) ayant un canal de produit en fusion (46) s'étendant en son sein, afin d'acheminer un produit en fusion depuis une entrée (36) se trouvant à l'extrémité arrière (48), vers au moins une entrée (12) traversant le moule, vers une cavité (14), la buse (10) ayant un élément de chauffage électrique (58) monobloc présentant une partie hélicoïdale s'étendant autour d'au moins une partie du canal de produit en fusion (46), la buse ayant une bride de positionnement (68) cylindrique s'étendant sur une distance prédéterminée vers l'avant depuis la partie de bride arrière (52), autour de la partie centrale (54), la bride de positionnement (68) ayant une surface intérieure (72) espacée de la surface extérieure (56) de la partie centrale (54), par un espace isolant (74) ayant une largeur prédéterminée, la partie de bride arrière (52) de la bride (10) ayant un alésage de thermocouple (82) s'étendant en son sein, depuis l'extrémité arrière (48) vers l'espace isolant (74) entre la partie centrale (54) et la bride de positionnement (68), caractérisée en ce que la buse (10) comprend un tube de thermocouple (18) creux s'étendant depuis l'alésage de thermocouple (82), à une distance prédéterminée vers l'avant le long de la surface intérieure de la bride de positionnement (68), afin de loger de manière amovible un élément de thermocouple (20) s'étendant dans l'espace isolant (74), le tube de thermocouple (18) étant espacé d'une distance prédéterminée depuis la surface extérieure (56) de la partie centrale (54) de la buse (10).

2. Buse de moulage par injection (10) selon la revendication 1, dans laquelle le tube de thermocouple (18) s'étend également dans l'alésage de thermocouple (82), via la partie de bride arrière (52) de la buse (10).

3. Buse de moulage par injection (10) selon la revendication 2, dans laquelle le tube de thermocouple (18) est au moins partiellement disposé dans une gorge (84) ménagée dans la surface intérieure (72) de la bride de positionnement (68) de la buse.

4. Buse de moulage par injection (10) selon la revendication 3, dans laquelle le tube de thermocouple (18) est brasé d'un seul tenant à demeure.

5. Buse de moulage par injection (10) selon la revendication 4, dans laquelle la surface extérieure (56) de la partie centrale (54) est abaissée de manière adjacente au tube de thermocouple (18), pour former un jeu suffisant entre eux.

6. Buse de moulage par injection (10) selon la revendication 4, dans laquelle la surface extérieure de la partie centrale présente un canal (88) s'étendant en alignement avec le tube de thermocouple (18) afin de former un jeu suffisant entre eux.
